# EUROPEAN PATENT APPLICATION

(11) **EP 1 067 028 A2**
(43) Date of publication of application: **10.01.2001**
(21) Application number: 00114670.3
(22) Date of filing: 07.07.2000
(51) Int. Cl.: B60R 25/04

(54) **Security apparatus for vehicle**

(30) Priority: 09.07.1999 JP 19671699; 09.07.1999 JP 19671899
(71) Applicant: MORIYAMA MANUFACTURING CO., LTD., Shuchi-gun, Shizuoka, 437-0292 (JP)
(72) Inventor: Kurano, Yoshiaki, c/o Moriyama Manufact. Co., Ltd., Shuchi-gun, Shizuoka 437-0292 (JP)
(74) Representative: Grünecker, Kinkeldey, Stockmair & Schwanhäusser Anwaltssozietät

(57) **Abstract**

In a vehicle for making it possible to start its engine by checking an ID for validity based on a wireless ID tag (transponder) 1, a ID check unit 3 of the vehicle is caused again to check the ID for validity by transmitting and receiving to and from the wireless ID tag 1 at a predetermined point in time after the engine is started. If the valid ID is not recognized at the point in time, it is made impossible to drive the vehicle with the started engine under the control of the ID check unit 3. Further, in a vehicle wherein a key 30 to which the wireless ID tag 2 is attached is inserted into a key hole of the vehicle and is operated for turning on an ignition switch 33 and making an ID check for validity using the wireless ID tag 2, thereby placing an engine 23 in a drive-possible state, a signal is transmitted from the vehicle (a transceiver 12 of a ID check unit 3) to the wireless ID tag 2 in a predetermined time after the ignition switch 33 is switched off from the on state by operating the key 30. If check means 13 of the ID check unit 3 recognizes ID, an alarm 16 generates an alarm; if the check means 13 of the ID check unit 3 cannot recognize ID, the alarm 16 does not generate an alarm.

## Description

### BACKGROUND OF THE INVENTION

### 1. Field of the Invention

This invention relates to a security apparatus for vehicle, using a function for checking an ID for validity for validity based on a wireless ID tag.

### 2. Description of the Related Art

For four-wheel vehicles, hitherto, a passive entry system of a vehicle using a wireless ID tag (system for making it possible to get in and, drive the vehicle without active operation) has been developed for the purposes of convenience to use the vehicle and preventing any other person than the authorized user from using the vehicle without permission. As the authorized user having a wireless ID tag (transponder) simply approaches the vehicle, the passive entry system enables the authorized user to get in the vehicle, start its engine, and drive the vehicle by causing the vehicle to check the ID for validity and unlock the vehicle without using a key or a remote control.

By the way, the passive entry system of a vehicle in the related art as described above operates in a similar manner to that of a conventional system using a key or a remote control after completion of entry by causing the vehicle to check the ID for validity based on the wireless ID tag; once the person having the wireless ID tag gets in the vehicle arid starts the engine, anybody can drive the vehicle regardless of the ID.

Thus, it is feared that when the authorized user leaves the vehicle with the engine started, a different person may ride away with the vehicle or a little child, etc., of a fellow passenger may start the vehicle in error, causing the vehicle to go out of control, leading to an accident; the passive entry system in the related art cannot reliably prevent such vehicle theft or prevent any unauthorized person from causing an accident by misoperation; this is a problem.

Also, to prevent a vehicle theft or illegal use of a vehicle, an unpermitted drive prevention apparatus of an engine adopting an ID check called an immobilizer has been developed wherein a wireless ID tag (transponder) is contained in the head of a key to operate an ignition switch and if the ignition switch is mechanically turned on by operating the key, the ignition is not electrically turned on unless an ID check unit of the vehicle determines that the ID from the wireless ID tag is the ID of the authorized user, whereby the engine is not started.

By the way, with the unpermitted drive prevention apparatus of an engine adopting an ID check in the related art as described above, a DC power supply with a battery is required as a power supply for operating the ID check unit and the ignition key is required as means for starting the ID check. Thus, the unpermitted drive prevention apparatus cannot be used with an engine not having a battery or art ignition switch as in an outboard motor, a batteryless motorcycle, an electric generator, etc., for example, and to use the unpermitted drive prevention apparatus with an engine comprising a battery and art ignition switch, if the battery voltage lowers, it is made impossible to make an ID check and the engine cannot be started; this is a problem.

Further, a so-called immobilizer system wherein an ignition switch is turned on by operating a key and at the same time, the ID code from a wireless ID tag (transponder) attached to the head of the key is checked to see if the ID is that of the authorized user, whereby it is made possible to drive an engine if the ID is that of the authorized user for the purpose of preventing a vehicle theft or mischief has been used with a vehicle of art automobile, a motorcycle, etc., wherein an ignition switch is turned on/off by operating a key.

On the other hand, hitherto, an apparatus for giving an alarm if a door of a vehicle is opened with a key inserted in a state in which an ignition switch is off to prevent the user from forgetting to remove the key after stopping an engine in a vehicle in which the engine is driven by operating the key to turn on/off the ignition switch has been put to use with automobiles, but such a key removal forgetting prevention apparatus is not yet put to use with motorcycles.

### SUMMARY OF THE INVENTION

It is therefore an first object of the invention to make it possible to reliably prevent the vehicle from being stolen because of riding away with the vehicle if the authorized user leaves the vehicle with its engine started and to make it possible to reliably prevent misoperation of any unauthorized person from causing an accident in a vehicle for making it possible to start the engine by checking an ID for validity based on a wireless ID tag.

In addition, it is therefore a second object of the invention to make it possible to use a security apparatus of a vehicle adopting an ID check also with an engine not having a battery or an ignition switch by enabling an ID check unit for checking an ID from a wireless ID tag for validity to be operated without the need for a battery or an ignition switch.

Further, it is therefore an object of the invention to provide security apparatus of a vehicle wherein the apparatus of an immobilizer system for making an ID check for validity using a wireless ID tag can be used to inform the user that he or she forgets to remove the key as an alarm without the need for a dedicated switch or sensor.

In a first embodiment of the invention, to the end, in a vehicle for making it possible to start the engine by checking an ID for validity based on a wireless ID tag, the vehicle is caused again to check the ID for validity at a predetermined point in time after the engine is started and if the valid ID is not recognized at the point in time, it is made impossible to drive the vehicle with the started engine.

According to the security apparatus for a vehicle of the first embodiment of the invention, when the vehicle is driven after the engine is started, if the authorized user drives the vehicle or exists in the spot, the vehicle is caused to check the ID for validity, whereby the vehicle can be driven with the already started engine.

In contrast, if any person other than the authorized user drives the vehicle and moreover the authorized user does not exist in the spot, based on the fact that the valid ID is not recognized (the IDs do not match or no ID is transmitted) at the point in time when the vehicle is caused again to check the ID for validity even if the engine is started, the engine is stopped or is not raced, thereby making it impossible to drive the vehicle with the engine, thus the vehicle cannot be continuously driven.

Next, in the second embodiment of the invention, there is provided a security apparatus for a vehicle adopting an ID check characterized in that an ID check unit is operated with output of an electric generator driven by an engine as a power supply and is connected to an engine ignition control circuit, that the engine can be started although the ID check unit is not operated, and that when the ID check unit is operated, if a valid ID is recognized, driving the engine is continued or if a valid ID is not recognized, driving the engine is stopped.

According to the second embodiment as described the above, the engine can be started although the ID check unit is not operated. Thus, first, the engine is started and the electric generator is driven, whereby the power supply voltage required for operating the ID check unit is provided as the engine speed rises, making it possible to operate the ID check unit with no battery.

When the ID check unit is operated and an ID check is made, once the ID is recognized as the ID of the authorized user, later driving the engine can be continued. However, if the valid ID is not recognized (an invalid ID is received or no ID is returned), ignition is stopped under the control of the engine ignition control circuit based on a signal from the ID check unit, thereby immediately stopping driving the engine 23.

Further, according to the third embodiment of the invention, there is provided, in a vehicle wherein a key to which a wireless ID tag is attached is inserted into a key hole of the vehicle and is operated for turning on an ignition switch and making an ID check for validity using the wireless ID tag, thereby placing an engine in a drive-possible state, a key removal forgetting prevention apparatus of the vehicle characterized in that a signal is transmitted from the vehicle to the wireless ID tag in a predetermined time after the ignition switch is switched off from the on state by operating the key arid if a validity ID is recognized, an alarm is issued and if no validity ID is recognized, no alarm is issued.

According to the third embodiment for the key removal forgetting prevention function, if the user forgets to remove the key after switching off the ignition switch, the apparatus used with the immobilizer system for making an ID check for validity using the wireless ID tag can be used to inform the user that he or she forgets to remove the key as an alarm without the need for a dedicated switch or sensor.

### BRIEF DESCRIPTION OF THE DRAWINGS

FIG. 1 is a block diagram to schematically show a security apparatus of a motorcycle according to a first embodiment of the invention;
FIG. 2 is a block diagram to schematically show the security apparatus for a vehicle comprising an engine adopting an ID check according to a second embodiment of the invention;
FIG. 3 is a block diagram to schematically show an immobilizer system of a vehicle in which the security apparatus is built according to a third embodiment of the invention; and
FIG. 4 is a schematic representation to show voltages of components in the immobilizer system of a vehicle shown in FIG. 3.

### DETAILED DESCRIPTION OF THE PREFERED EMBODIMENT

Referring now to the accompanying drawing, there is shown a first embodiment of a security apparatus for a vehicle of the invention.

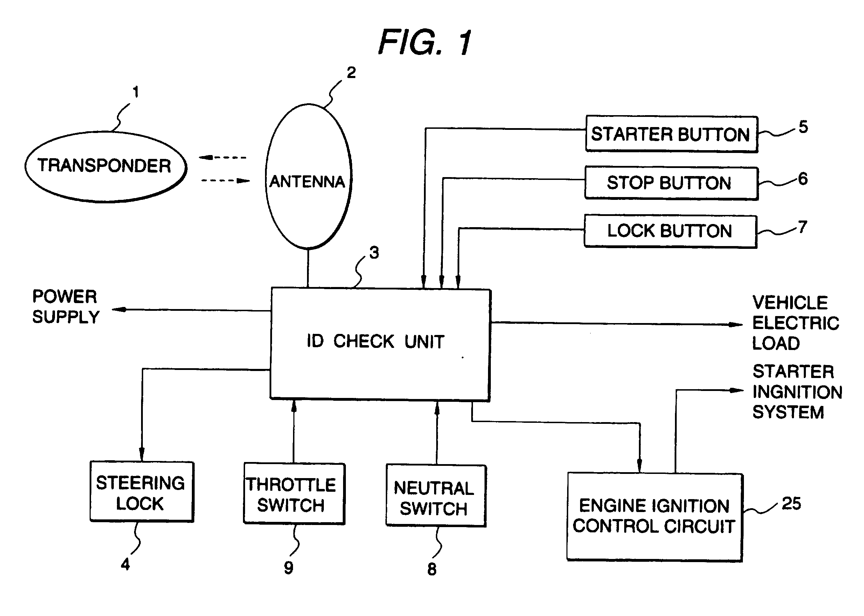

FIG. 1 schematically shows an example of a keyless system of a motorcycle incorporating a security apparatus of a motorcycle according to the first embodiment of a security apparatus for a vehicle of the invention.

In the keyless system of a motorcycle shown in FIG. 1, when the authorized user carrying a transponder (wireless ID tag) 1 of wrist band built-in type, portable card type, etc., approaches his or her motorcycle and performs predetermined operation, for example, pressing a starter button 5, etc., a query radio wave is emitted from an antenna 2 of the vehicle and upon reception of the radio wave, a radio wave of ID is transmitted from the transponder 1, then the ID from the transponder 1 received through the antenna 2 is input to a ID check unit 3 of the vehicle and is checked for validity.

When the ID check unit 3 checks that the ID is that of the authorized user, electric circuitry of the vehicle is turned on by an output signal from the ID check unit 3, starter and ignition systems are turned on electricity, and electrically powered steering lock 4 is automatically released, then a sound is produced or an indicator lamp is turned on to display the fact that the electric circuitry is turned on.

If such display is recognized and then the starter button 5 is pressed, the engine is started and it is made possible to drive the vehicle. Then, the vehicle is driven by usual operation and to complete use of the vehicle after the vehicle has been driven, a stop button 6 is pressed for stopping the engine. Then, a sound is produced or an indicator lamp is turned on to prompt for locking. A lock button 7 is pressed in response to the indication for making it possible to lock the vehicle, then the steering wheel is turned to a lock position, whereby the vehicle can be stopped with the steering lock 4 applied.

To the keyless system of a motorcycle, the following configuration is added as a unpermitted drive prevention function to the security apparatus so as to prevent others from driving the vehicle without permission when the authorized user leaves the vehicle after starting the engine:

A neutral switch 8 for sensing that a gear of a transmission is shifted to any other position than neutral and a throttle switch 9 for sensing that a throttle is opened are connected to the ID check unit 3 of the vehicle so as to output the sense result as means for sensing that vehicle starting operation has been performed.

On the other hand, the ID check unit 3 of the vehicle contains such a program (circuit) to again check the ID transmitted from the transponder 1 for validity in response to sensing the vehicle starting operation from the neutral switch 8 and the throttle switch 9. If the ID of the authorized user is not recognized (no signal is transmitted from the transponder 1) when the vehicle starting operation is sensed, the ignition system and electric load system of the vehicle are controlled by an output signal from the ID check unit 3 so that either or both of the following events occur: If the throttle is opened, the engine is not raced and if the gear is shifted to any other position than neutral, the engine is stalled.

According to the unpermitted drive prevention function of a vehicle in the keyless system of a motorcycle of the first embodiment as described above, when the authorized user leaves the vehicle with the engine started, if any other person attempts to steal the vehicle and ride away with the vehicle or touches the vehicle without permission and performs misoperation, unless the ID check unit 3 of the vehicle verifies the validity of the ID, even if the engine is started, when the vehicle starting operation is performed, either or both of the events of not racing the engine or stalling the engine occur, whereby the vehicle cannot be driven, so that the vehicle can be reliably prevented from riding away with the vehicle and being stolen.

The motorcycle does not have equivalents to doors of a four-wheel vehicle and a throttle grip and a shift pedal are exposed to the outside and can be touched easily by anybody; however, according to the first embodiment, mischief and accidents of motorcycles can be prevented effectively.

In the keyless system of a motorcycle comprising the configuration for unpermitted drive prevention function as described above, in the first embodiment, the following idling prevention configuration for preventing the vehicle from being left idling to prevent meaningless idling from continuing for a long time, polluting the atmosphere and giving noise to the neighborhood.

The neutral switch 8 is used as sense means and a program (circuit) to prevent the vehicle from being left idling is contained in the ID check unit 3, whereby if the ID of the authorized user is not recognized (no signal is transmitted from the transponder 1) continuously for a predetermined time or longer with the transmission placed in the neutral position after the engine is started, the ignition system and the electric load system of the vehicle are controlled by an output signal from the ID check unit 3, thereby stopping the engine.

In doing so, if the user leaves the vehicle idling with the vehicle in the idling state, the engine is automatically stopped when the user leaves the vehicle and a predetermined time or more has elapsed. Thus, fruitless idling can be prevented and air pollution and generation of noise caused by the fruitless idling can be prevented. For the program to prevent the vehicle from being left idling based on the fact that the ID of the authorized user is not recognized continuously for a predetermined time or longer as described above, sensing the neutral position is not an essential requirement.

Further, in the first embodiment, although the vehicle lock (steering lock) 4 is electrically powered autolock and is automatically released without performing active unlocking operation by making an ID check using the transponder 1 as the keyless system of a motorcycle, an additional lock button 7 is provided, thereby making it possible to select lock or unlock.

That is, normally no battery is connected to a motorcycle during storage in a warehouse or being put on sale as merchandise and the vehicle is pushed and moved by hand. At the time, unlock cannot be selected with autolock and thus the locked vehicle is lifted up arid carried and it becomes difficult to move the vehicle; in contrast, the lock button 7 is provided for making it possible to select lock or unlock independently of the ID check as described above, so that the problem peculiar to the motorcycles at the distribution stage can be resolved.

The first embodiment of the security apparatus for a vehicle of the invention has been described, but the invention is not limited to the specific embodiment; for example, the ID can also be checked for validity when a given time has elapsed from starting the engine with a timer in addition to again checking the ID for validity at the vehicle starting operation time as shown in the description of the first embodiment, and the configuration for preventing the vehicle from being left idling or the lock button, etc., for making it possible to select lock or unlock as shown in the description of the first embodiment can also be omitted. The invention is not limited to the application to the apparatus for motorcycles as shown in the description of the first embodiment and can also be applied to other vehicles such as four-wheel vehicles; the combination and arrangement of parts may be resorted to without departing from the spirit and the scope of the first embodiment of the invention, needless to say.

Referring now to the accompanying drawing, there is shown a second embodiment of a security apparatus for a vehicle of the invention.

The second embodiment for carrying out the invention is basically identical to the first embodiment for carrying out the invention in construction. In the following description of the second embodiment of the invention, like reference numerals are imparted to like members or members having like functions to those described in the first embodiment of the invention previously.

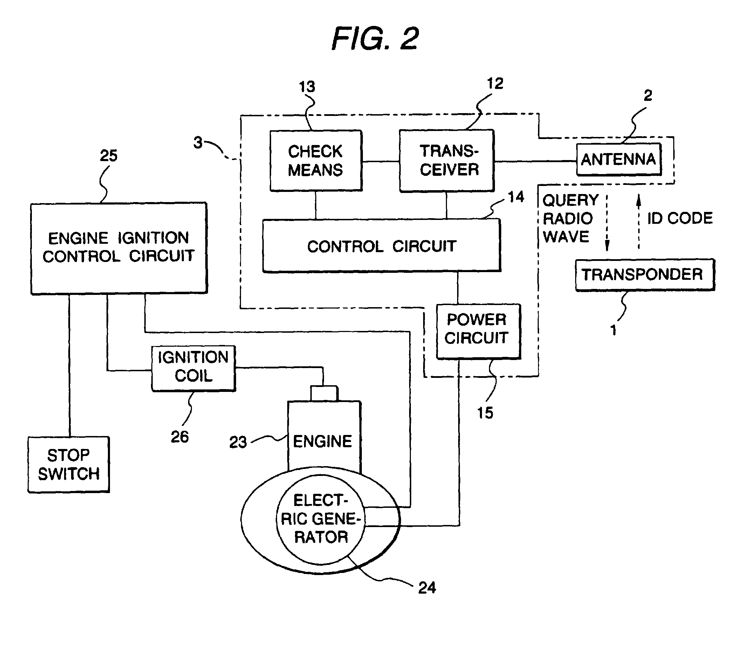

FIG. 2 schematically shows the second embodiment of a security apparatus for a vehicle adopting an ID check of the invention. An ID check unit 3 for checking the ID of a transponder (wireless ID tag) 1 portable by the user for validity is installed in the base body in which an engine 23 is placed (vehicle, etc.,) as described in the first embodiment and the ID check unit 3 further comprises an antenna 2 (the antenna 2 may be not included in the ID check unit as the first embodiment), a transceiver 12, check means 13, a control circuit 14, and a power circuit 15.

As the engine 23 is started and the voltage of an electric generator 24 rises, the voltage of the power circuit 15 reaches a predetermined value, whereby the ID check unit 3 is operated and transmits a query radio wave through the antenna 2 from the transceiver 12 to transponder 1. Upon reception of the query radio wave, the transponder 1. returns ID code to the ID check unit 3. The ID code received at the transceiver 12 through the antenna 2 from the transponder 1 is checked for validity by the check means 13 and the check result is input to the control circuit 14.

If the transponder 1 is a discrete part, preferably a holder for holding the transponder 1 is provided in the proximity of the antenna 2 of the ID check unit 3 on the base body in which the engine 23 is placed (vehicle, etc.,) and the transponder 1 is held on the holder, whereby wireless communication between the ID check unit 3 and the transponder 1 can be conducted with weak power.

If the base body in which the engine 23 is placed (vehicle, etc.,) is provided with an ignition switch operated with a key, the transponder 1 may not only be a discrete part, but also be formed integrally with the key of the ignition switch as shown in a third embodiment described later. Such that case if the ignition switch is on, the engine can be started even if no ID check is made for the reason as described later.

The ID check unit 3 for checking the ID code of the transponder 1 for validity is electrically connected to the electric generator 24 for engine ignition driven by rotation of the engine 23 and is operated with the voltage generated by the electric generator 24 for engine ignition as a power supply. For the ID check unit 3, an engine ignition control circuit 25 enables the engine 23 to be started if the voltage generated by the electric generator 24 for engine ignition is insufficient to operate the ID check unit 3.

The ID check unit 3 has the control circuit 14 connected to the engine ignition control circuit 25 and outputs a signal from the control circuit 14 to the engine ignition control circuit 25 in response to the ID check result of the ID check means 13. Based on the output signal from the control circuit 14, the engine ignition control circuit 25 controls an ignition coil 26 for ignition of the engine so as to either continue or stop driving the engine.

For the connection of the ID check unit 3 and the engine ignition control circuit 25, the ID check unit 3 is a separate unit from the engine ignition control circuit 25 and both may be electrically connected as shown in FIG. 2 or the ID check unit 3 and the engine ignition control circuit 25 may be formed in one piece as one engine ignition control unit.

The described security apparatus for a vehicle having an engine adopting an ID check of the second embodiment enables the engine 23 to be started even in a state in which the ID check unit 3 cannot be operated with the voltage generated by the electric generator 24 for engine ignition with the engine 23 stopped. Thus, first, when the engine 23 is started and the electric generator 24 for engine ignition is driven, the power supply voltage required for operating the ID check unit 3 is supplied from the electric generator 24 for engine ignition as the engine speed rises, making it possible to operate the ID check unit 3 with no battery.

When the ID check unit 3 is operated with the voltage from the electric generator 24 for engine ignition, if the transponder 1 that the authorized user possesses exists in the range of transmission and reception of the antenna 2 of the ID check unit 3, driving the engine 23 is continued under the normal control of the engine ignition control circuit 25 once the ID check unit 3 recognizes the valid ID. However, if the ID check unit 3 does riot recognize the valid ID (an invalid ID is received or no ID is returned), ignition of the engine 23 by the ignition coil 26 is stopped under the control of the engine ignition control circuit 25 in response to an output signal from the ID check unit 3 based on the result and driving the engine 23 is immediately stopped.

According to the second embodiment of the security apparatus for a vehicle having an engine adopting an ID check of the invention, after the engine 23 is started, the ID check unit 3 checks to see if the ID from the transponder 1 is the ID of the authorized user, and the engine 23 is stopped under the control of the engine ignition control circuit 25 if the valid ID is not recognized in response to the result. Consequently, the engine 23 can be reliably prevented from being driven without permission of the authorized user.

Moreover, when the ID check is made, the ID check unit 3 for checking the ID code from the transponder 1 for validity is operated with the voltage from the electric generator 24 for engine ignition without the need for a battery or an ignition switch, so that the unpermitted drive prevention apparatus can also be used with an engine not having a battery or an ignition switch such as a batteryless motorcycle engine, an outboard motor engine, an electric generator engine, or any other general-purpose engine. Since ID check start means such as an ignition switch is not required, costs can be reduced arid if a theft or mischief is encountered, the destroyed part is decreased accordingly.

The second embodiment of the security apparatus for a vehicle having of an engine adopting an ID check of the invention has been described, but the invention is not limited to the specific embodiment; for example, the security apparatus can also be used with an engine of a vehicle, etc., comprising a battery and an ignition switch. To use the security apparatus with such an engine, an ID check can be made for reliably preventing the engine from being driven without permission. And if the battery voltage lowers, an accident in which the ID check unit cannot be operated and thus the engine cannot be started can be circumvented. The electric generator is not limited to the electric generator for engine ignition and may be an electric generator driven by an engine such as an electric generator for charging a battery.

Note that since the security apparatus according to the second embodiment of the invention basically adopts the security apparatus according to the first embodiment. Namely, since the relationship between transponder 1 and the ID check unit 3 respectively employed in the second embodiment are generally identical to that described in the first embodiment, the security apparatus according to the second embodiment can enjoy the operations and effectiveness of both the first and second embodiments.

Referring now to the accompanying drawing, there is shown a third embodiment of a security apparatus for a vehicle of the invention.

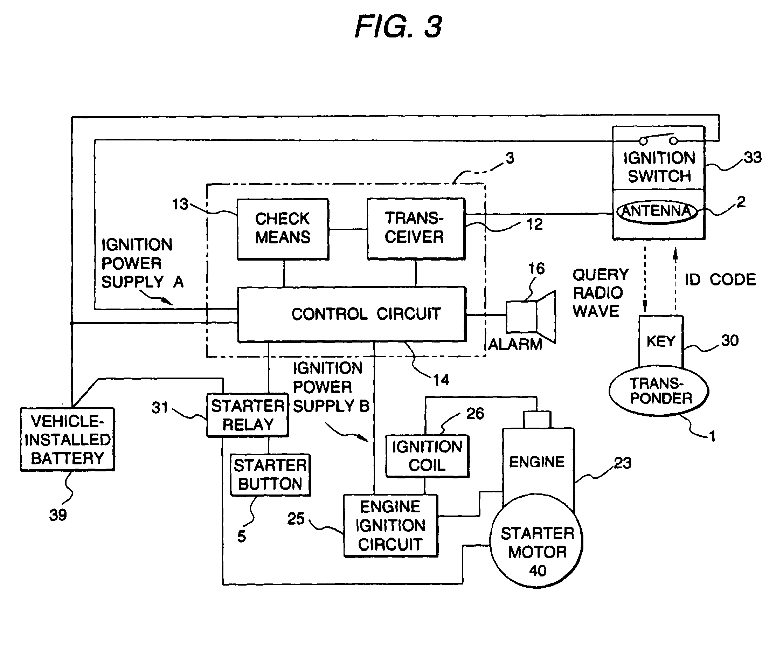

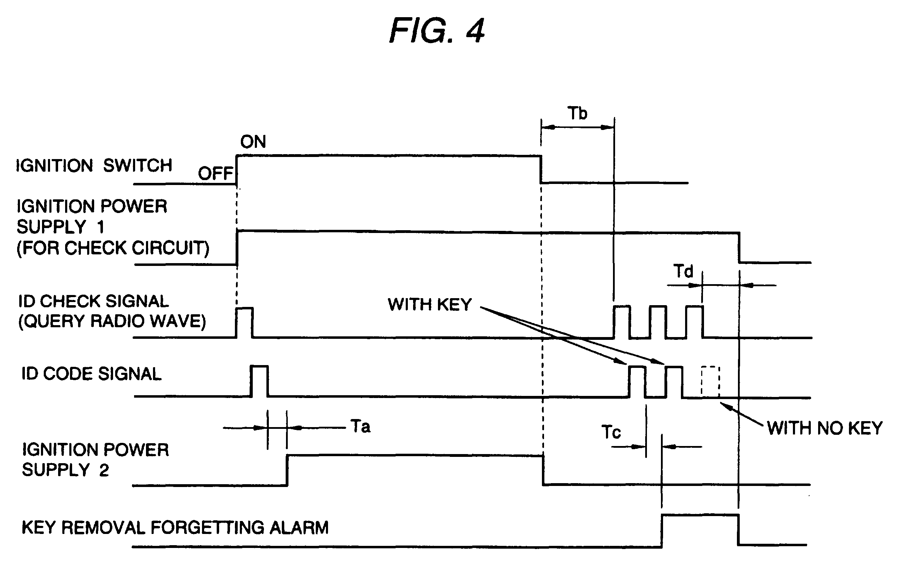

The third embodiment for carrying out the invention is basically identical to the first and second embodiment for carrying out the invention in construction. In the following description of the third embodiment of the invention, like reference numerals are imparted to like members or members having like functions to those described in the first and second embodiment of the invention previously. FIG. 3 schematically shows an example of an immobilizer system of a vehicle in which the security apparatus is built according to the third embodiment of the invention. FIG. 4 shows voltages of components in such an immobilizer system of a vehicle.

As the configuration of the immobilizer system of a vehicle, the third embodiment of the invention will be discussed. As shown in FIG. 3, a transponder (wireless ID tag) 1 is attached to the head of a key 30 carried with the user, and an antenna 2 for transmitting and receiving a radio wave to and from the transponder 10 is attached to an ignition switch 33 of the vehicle into which the key 30 is to be inserted.

A ID check unit 3 of the vehicle to which the ignition switch 33 and the antenna 2 are connected has a transceiver 12 and check means 13 as well as a control circuit 14 (the ID check unit is identical to one of the first and second embodiment expect power circuit 15), and the control circuit 14 of the ID check unit 3 is connected to the ignition switch 33 and the antenna 2 through the transceiver 12 and is also connected to a battery 39 placed in the vehicle and the battery 39 is used as a power supply of the ID check unit 3.

Also, the control circuit 14 of the ID check unit 3 is connected to a starter relay 31 so as to control turning on electricity of an engine starting system for driving a starter motor 40 using the battery 39 as a power supply and is connected to an engine ignition unit (engine ignition control circuit 25) so as to control the power supply from the battery 39 through the control circuit 14 of the ID check unit 3 for an engine ignition system for controlling ignition of an engine 23. It is also connected to an alarm 16 used as key removal forgetting warning means.

In the immobilizer system of the vehicle, if the key 30 is inserted into the key hole of the ignition switch 33 and then is operated to turn on the ignition switch 33 which is off, power is supplied from the battery 39 to the ID check unit 3, whereby the ID check unit 3 senses that the ignition switch 33 is turned on, and a query radio wave is transmitted through the antenna 2 from the transceiver 12 of the ID check unit 3. Upon reception of the query radio wave, ID code is transmitted from the transponder 10 of the key 30.

The ID code received at the transceiver 12 of the ID check unit 3 through the antenna 2 is checked for validity by the check means 13 of the ID check unit 3 and if the ID is determined the ID of the authorized user, the starter relay 31 and the engine ignition circuit 25 are turned on electricity from the control circuit 14 of the ID check unit 3, whereby the electric circuits of the engine starting system and the engine ignition system with the battery 39 as the power supply are turned on and an indicator lamp is turned on, etc., to indicate the fact that the electric circuits are on.

If the ID is not determined the ID of the authorized user as the check result of the ID code transmitted from the transponder 10 (for example, the key 30 is a fake) although the key 30 is operated to turn on the ignition switch 33, the starter relay 31 and the engine ignition circuit 25 are not turned on electricity from the control circuit 14 of the ID check unit 3 and the electric circuits of the engine starting system and the engine ignition system are not turned on, so that it is made impossible to start or drive the engine 23.

If the user checks on the indication of the indicator lamp, etc., that the electric circuits of the engine starting system and the engine ignition system are on and presses a starter button 5 of the engine starting system, the starter relay 31 is activated, driving the starter motor 40 using the battery 39 as the power supply, whereby the engine 23 can be started.

After the engine 23 is started, the engine ignition circuit 25 operates normally, enabling the vehicle to be driven by normal drive operation. To terminate driving the vehicle and stop the engine 23, the user operates the key 30 to turn off the ignition switch 33. At the same time, turning on electricity of the engine ignition circuit 25 from the control circuit 14 of the ID check unit 3 is turned off, stopping the engine 23.

In the described immobilizer system of the vehicle, in the third embodiment, as shown in FIG. 3, the key 30 is operated to switch on the ignition switch 33 from the off state and turning on electricity of the engine ignition circuit 25 from the ID check unit 3 (control circuit 14) is turned off, whereby power supply from the battery 39 to the ID check unit 3 (control circuit 14), namely, ignition power supply A is still on after the engine 23 is stopped.

A query radio wave (ID check signal) is transmitted consecutively two or more times through the antenna 2 from the transceiver 12 after the expiration of a preset constant time (Tb) from switching on the ignition switch 33 from the off state by the control circuit 14 of the ID check unit 3 operated still after the ignition switch 33 is turned off, and the current ID code from the transponder 10 is received at the transceiver 12 and the ID code signal is checked for validity by the check means 13.

Since the key 30 is still inserted in the key hole of the ignition switch 33, ID code is transmitted from the transponder 10 receiving the query radio wave and the ID code signal is checked for validity by the check means 13 of the ID check unit 3 (it is determined that the key exists), the query radio wave is transmitted continuously through the antenna 2 from the transceiver 12 and in Tc, the alarm 16 is sounded by a signal from the control circuit 14 for issuing an alarm.

On the other hand, if the key 30 is removed from the key hole of the ignition switch 33 and the transponder 10 receives no query radio wave and it is made impossible for the check means 13 of the ID check unit 3 to check the ID code signal for validity (it is determined that no key exists), turning on electricity of the transceiver 12 and the alarm 16 from the control circuit 14 is turned off in Td, thereby stopping transmitting the query radio wave and the alarm.

According to the described key removal forgetting prevention function of the vehicle of the third embodiment of the invention, the security apparatus of the immobilizer system for preventing any other person than the authorized user to make illegal use of the vehicle by using the transponder (wireless ID tag) 2 to make an ID check can be used to inform the user that he or she forgets to remove the key 30 on an alarm issued by the alarm 16.

Moreover, the alarm 16 is issued only if the key 30 is still inserted in the key hole of the ignition switch 33 after the expiration of the constant time from switching off the ignition switch 33 from the on state by operating the key 30, so that issuing an unnecessary alarm when the user inserts the key to ride on the vehicle can be avoided.

That is, the key removal forgetting prevention apparatus of the vehicle in the related art also involves a problem of an unnecessary alarm annoying the user and those around him or her because an alarm is issued at the instant at which to ride on the vehicle, the user opens the automobile door and inserts the key and thus if such a key removal forgetting prevention apparatus is applied to a vehicle such as a motorcycle with no doors and an alarm is issued when a key is inserted with an ignition switch off regardless of whether a door is opened or closed, a problem of issuing an alarm at the instant at which the key is inserted into the ignition switch occurs, of course. However, the security apparatus of the third embodiment can resolve the problem of unnecessary alarms.

The query radio wave (ID check signal) after the ignition switch 33 is switched off may be not only transmitted in the constant time (Tb) preset by a timer, etc., as shown in the third embodiment, but also transmitted when a parked state is entered in association with a side stand switch (or a main stand switch), a parking brake switch, etc., (a door switch is also possible if the vehicle is a four-wheel vehicle).

To thus start to transmit the query radio wave (ID check signal) when the parked state is entered, a power supply is provide only for a given time by a timer after the ignition switch 33 is switched off, whereby sounding an unnecessary alarm when the user inserts the key to ride on the vehicle can be suppressed.

Further, the security apparatus having the key removal forgetting prevention function of the third embodiment checks the ID code for validity using the query radio wave consecutively two or more times, whereby the alarm issued because the user forgets to remove the key can be automatically stopped simply by removing the key 30 without providing additional means for stopping the alarm issued by the alarm 16.

In this regard, the ID code check for validity using the query radio wave may be made only once rather than consecutively two or more times as in the third embodiment. In this case, however, the alarm issued because the user forgets to remove the key will be stopped by added operation means such as a button.

The third embodiment of the key removal forgetting prevention apparatus of the vehicle of the invention has been described, but the invention is not limited to the specific embodiment; for example, in the described configuration, the following is also possible: Before an alarm is sounded after the ignition switch is switched off from the on state, the key is again operated to turn on the ignition switch and then operated again to turn off the ignition switch within a predetermined time, whereby the control circuit of the controller is caused to sense the event and then no alarm is issued even in a state in which the key is inserted with the ignition switch off. In doing so, if the engine is stopped with the key inserted to refill the vehicle at a gas station or service the vehicle, issuing an unnecessary alarm can be avoided simply by operating the key as described above.

While the presently preferred first to third embodiment of the present invention has been shown and described, it is to be understood that this disclosure is for the purpose of illustration and that various changes and modifications may be made without departing from the scope of the invention as set forth in the appended claims.

According to the security apparatus having the unpermitted drive prevention function of the first embodiment of the invention as described above, while the authorized user leaves the vehicle with the engine started, if any person other than the authorized user performs the vehicle starting operation, the vehicle cannot be continuously driven, so that the vehicle can be reliably prevented from being stolen because of riding away with the vehicle and misoperation of any unauthorized person can be prevented from causing an accident.

According to the security apparatus having the unpermitted drive prevention function for an engine by adopting an ID check of the second embodiment of the invention as described above, the ID check unit can be operated without the need for a battery or an ignition key. Accordingly, the security apparatus can also be used with an engine not having a battery or an ignition switch, so that the application range of the security apparatus can be widened. To use the security apparatus with an engine comprising a battery and an ignition switch, an accident in which as the battery voltage lowers, ID check cannot be made and thus the engine cannot be started can also be circumvented.

According to the security apparatus having the key removal forgetting prevention function of the third embodiment of the invention as described above, the security apparatus having the immobilizer system for making an ID check for validity using a wireless ID tag can be used to inform the user that the key remains inserted after the engine is stopped without the need for a dedicated switch or sensor; the user can be prevented from forgetting to remove the key.

## Claims

1. A security apparatus for a vehicle comprising:
a transponder; and
checking means for checking an ID for validity based on said transponder,
wherein said apparatus check the ID for validity again at a predetermined point in time after an engine of said vehicle is started, and wherein it is made impossible to drive the vehicle with the started engine, when the valid ID is not recognized at the point in time.

2. The security apparatus according to claim 1, wherein said checking means for checking the ID for validity based on said transponder and controlling said engine to be started when the valid ID is recognized.

3. The security apparatus according to claim 1, wherein said checking means cheeks the ID for validity again at the point in time when a vehicle starting operation is performed.

4. The security apparatus according to claim 1, wherein said checking means checks the ID for validity again at the point in time when a given time has elapsed from starting the engine.

5. The security apparatus according to claim 1, wherein said checking means stops said engine of said vehicle when the valid ID is not recognized continuously for a predetermined time or longer after said engine is started.

6. A security apparatus for a vehicle, comprising:
generating means driven by an engine of said vehicle;
checking means operated with output of said generating means;
wherein said engine have practical operation to be started when said checking means is not operated.

7. The security apparatus according to claim 6, comprising:
an engine ignition control circuit connected to said checking means;
wherein said engine ignition control circuit controls said engine by checking the ID.

8. The security apparatus according to claim 7, wherein said engine ignition control circuit controls a driving of said engine to be continued when a valid ID is recognized, and controls the driving of said engine to be stopped when the valid ID is not recognized.

9. The security apparatus according to claim 1 to 8, wherein said transponder is a wireless ID tag.
